# EUROPEAN PATENT SPECIFICATION

(11) **EP 3 658 420 B1**
(45) Date of publication and mention of the grant of the patent: **02.03.2022**
(21) Application number: 18746737.8
(22) Date of filing: 20.06.2018
(51) Int. Cl.: B60R 21/015

(54) **DRIVER SITTING POSITION CONTROLLED VEHICLE COLLISION AVOIDANCE**
FAHRERSITZPOSITION KONTROLLIERTE FAHRZEUGKOLLISIONVERMEIDUNG
ÉVITEMENT DE COLLISION COMMANDÉ PAR LA POSITION ASSISE D'UN CONDUCTEUR

(30) Priority: 25.07.2017 US 201762536488 P; 18.05.2018 US 201815983126
(43) Date of publication of application: 03.06.2020
(73) Proprietor: Zafeirakis, Georgios, 166 75 Glyfada Attikis (GR)
(72) Inventor: Zafeirakis, Georgios, 166 75 Glyfada Attikis (GR)
(74) Representative: Gallego Jiménez, José Fernando
(86) International application number: PCT/GR2018/000028
(87) International publication number: WO 2019/021029

(56) References cited:
- EP-A1- 1 731 364
- WO-A1-2015/013311
- US-A1- 2003 227 424
- US-A1- 2006 178 787
- US-A1- 2016 001 781

## Description

### BACKGROUND OF THE DISCLOSURE

### Field of the Disclosure

The present disclosure relates generally to vehicle collision avoidance systems. More specifically, the present disclosure relates to a vehicle collision avoidance system providing front blind spot assistance and rearview parking assistance.

### Description of the Related Art

Due to the general shape of most automobiles, trucks, heavy machinery, ships, etc., significant blind spots exist for the driver. For example, the driver is generally positioned several feet behind the front bumper of the vehicle in order to accommodate the engine compartment. However, positioning the driver away from the front of the vehicle creates a situation where the driver needs to advance the front portion of the vehicle into an intersection in order to observe oncoming traffic before proceeding across the intersection.

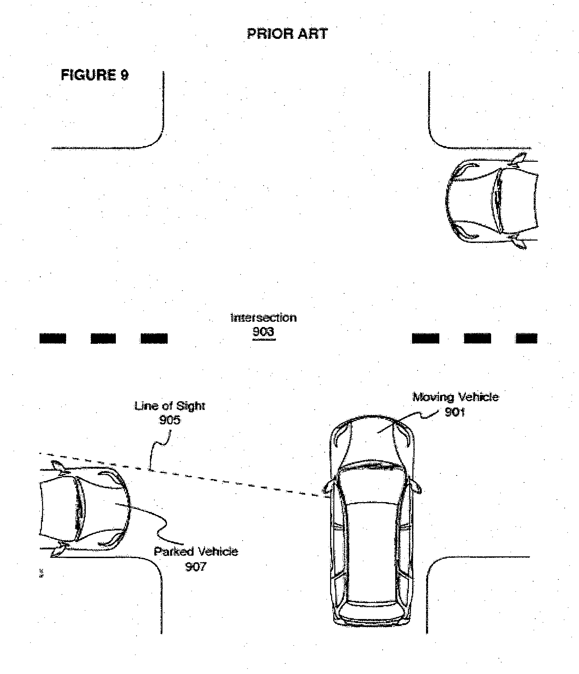

As shown in FIGURE 9 representing the prior art, the driver of moving vehicle 901 must move into the intersection 903 in order to have a line of sight 905 that clears a parked vehicle 907. However, in moving into the intersection 903, the driver exposes a significant portion of the front end of the moving vehicle 901 to oncoming traffic. In this situation the moving vehicle 901 risks a collision with an oncoming vehicle if the driver of the oncoming vehicle is distracted or otherwise unable to swerve around the moving vehicle 901. WO 2015/013311 A discloses a vehicle avoidance collision system detecting a body movement of a driver. EP2487648 A discloses a vehicle collision avoidance system according to the preamble of claim 1.

### SUMMARY OF THE DISCLOSURE

This disclosure provides safety and eliminates the stress of the driver allowing him to judge when it is the right time to cross a junction or enter a street with limited side visibility, by enhancing driver's awareness with automation.

An object of the present disclosure is to mitigate the danger of a collision between a vehicle entering an intersection and oncoming traffic.

Another object of the present disclosure is to facilitate reverse parking maneuvers with a vehicle.

Another object of the present disclosure is to facilitate reverse driving maneuvers with a vehicle.

The present invention is a vehicle collision avoidance system having: a camera disposed on a vehicle and arranged to monitor at least one collision prone region adjacent to the vehicle; a sensor positioned within the vehicle and arranged to determine a driver's head position relative to a designated point in the vehicle; a display disposed in view of the driver, the display coupled to the camera; and a controller configured to control operation of the sensor, the camera and the display. The controller activates the display and the camera to display the at least one collision prone region adjacent to the vehicle when the sensor detects that the driver's head is beyond a threshold distance from the designated point.

Additionally, the camera is a wide field of view camera disposed on a rear area of the vehicle and arranged to image an area near a rear bumper and a portion of the bumper of the vehicle.

In the present invention, a normal field of view camera is disposed on a rear area of the vehicle and arranged to image an area behind the vehicle, the normal field of view camera being coupled to the display and operationally controlled by the controller.

The normal field of view camera and the wide field of view camera are provided in a single camera with a field of view adjustable by the controller.

In an embodiment of the present disclosure, the vehicle collision avoidance system has an electronically adjustable side-view mirror. The side-view mirror is controllably adjusted by the controller in response to the driver's head position. One or more side-view mirrors controllably adjustable by the controller may be provided on the vehicle.

In an embodiment of the present disclosure, the camera is disposed at a forward area of the vehicle and arranged to image a region encompassing both sides of the vehicle forward of a front of the vehicle.

An embodiment of the present disclosure is a vehicle collision avoidance method for a motor vehicle. The method includes the steps of: detecting a body movement by a driver; evaluating the body movement to determine if the body movement exceeds a threshold distance; and activating a collision avoidance process when the body movement exceeds the threshold distance. The body movement is a forward-leaning movement, and the threshold distance is measured from a driver's seat headrest.

Additionally, the collision avoidance process also includes the steps: detecting whether the motor vehicle is in a forward gear; activating a front-view camera when the motor vehicle is in neutral or a forward gear; and transmitting a video signal from the front-view camera to a display viewable by the driver. The front-view camera has at least a 180° field of view forward of the motor vehicle. Alternatively, the front-view camera includes a plurality of cameras configured to provide the 180° field of view.

Another embodiment of the present disclosure is a collision avoidance process that includes the steps: detecting whether the motor vehicle is in a reverse gear; activating a rear-view camera when the motor vehicle is in a reverse gear; and transmitting a video signal from the rear-view camera to a display viewable by the driver. The rear-view camera is configured to provide a view behind the motor vehicle.

The embodiment further includes the steps: processing the video signals to provide a normal field of view to the driver when the body motion is less than the threshold distance and greater than a second threshold distance; and processing the video signals to provide a wide field of view to the driver when the body motion exceeds the threshold distance.

Additionally, an embodiment of the present disclosure includes adjusting one or more side-view mirrors to provide a rear parking view to the driver when the body motion exceeds the threshold distance; and adjusting the side-view mirror to provide a normal driving view to the driver when the body motion is less that the threshold distance and greater than the second threshold distance.

### BRIEF DESCRIPTION OF THE DRAWINGS

These and other features, aspects and advantages of the present disclosure will become better understood with regard to the following description, appended claims and accompanying drawings wherein:
FIGURE 1 illustrates a side-view mirror of a vehicle adjusted for driving, in accordance with an embodiment of the present disclosure;
FIGURE 2 illustrates a side-view mirror of a vehicle adjust for viewing obstacles during reverse driving / parking, in accordance with an embodiment of the present disclosure;
FIGURE 3 illustrates a vehicle interior showing a driver positioned for driving, in accordance with an embodiment of the present disclosure;
FIGURE 4 illustrates a vehicle interior showing a driver in a lean-forward position, in accordance with an embodiment of the present disclosure;
FIGURE 5 illustrates a rear view of a vehicle exterior, in accordance with an embodiment of the present disclosure;
FIGURES 6-8 illustrate rear-view parking camera views, in accordance with an embodiment of the present disclosure;
FIGURE 9 illustrates a vehicle entering an intersection, in accordance with the prior art;
FIGURE 10 illustrates a front view of a vehicle exterior, in accordance with an embodiment of the present disclosure;
FIGURE 11 illustrates a vehicle entering an intersection, in accordance with an embodiment of the present disclosure;
FIGURES 12 - 14 illustrate a process in accordance with an embodiment of the present disclosure; and
FIGURE 15 illustrates a block representation of an embodiment of the present disclosure.

### DETAILED DESCRIPTION OF THE DISCLOSURE

The present disclosure includes two main components, which combine to provide a comprehensive collision avoidance system. The Forward Blind Spot Assistance component reduces the risk of collision while a driver is attempting to traverse an intersection. Additionally, the Rear View Parking Assistance component allows drivers to safely maneuver a vehicle in reverse, whether for the purpose of backing into a parking spot, parallel parking, or reversing out of a parking spot. While embodiments described herein refer to collision avoidance systems that include both the Forward Blind Spot Assistance component and the Rear View Parking Assistance component, one of ordinary skill in the art may readily implement either component individually without departing from the intent of the present disclosure.

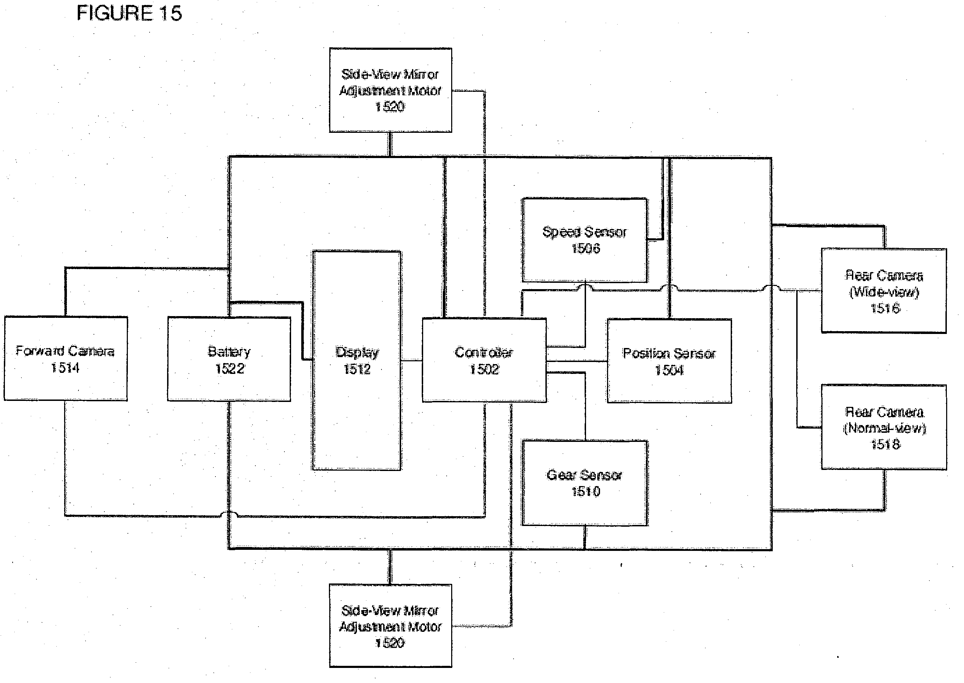

FIGURE 15 shows an embodiment of a vehicle collision avoidance system according to the present disclosure. The vehicle collision avoidance system includes a controller 1502 configured to control the various sensors, cameras, motors and display as well as execute a vehicle collision avoidance method, as described herein below. Additionally, the system shown in FIGURE 15 includes at least one position sensor 1504, at least one speed sensor 1506, and at least one gear sensor 1510 coupled to the controller 1502. The controller 1502 is also coupled to a display 1512 that is configured to switchably display video imaged by at least one forward camera 1514, at least one rear camera (Wide-view) 1516 and at least one rear camera (Normal-view) 1518. Additionally, the controller 1502 is coupled to side-view mirror adjustment motors 1520. Further, the system shown in FIGURE 15 is equipped with a battery 1522 configured to provide energizing power to the various components described above.

The rear camera (Wide-view) 1516 is configured and oriented to image a close in region to the rear bumper as well as imaging the entire length of the rear bumper. In order to accomplish this, the rear camera (Wide-view) 1516 is angled at a downward angle of 45°± 10° At this angle, the driver receives a nearly top-down view near the bumper that allows for closer approaches to obstacles. The driver can safely come very close (few inches) to other cars or obstacles without risk. The wide view helps the driver while exiting a parking place in reverse gear. If other cars or buildings are blocking the driver's view, the close view wide angle camera shows everything that lies on the right and left side behind the car.

The rear camera (Normal-view) 1518 provides a rearward view similar to the view a driver would have by turning to look rearward or if the driver looked at a rearview mirror.

In the embodiment shown in FIGURE 15, the position sensor 1504 may include a calibration feature that may be hardware implemented, such as with potentiometers, or software implement, such that the controller provides the driver with a calibration interface on the display 1512. The calibration feature allows the driver to fine tune the position sensor 1504 so that the position sensor 1504 properly interprets the driver's intentions:

Moreover, the system shown in FIGURE 15 may include one or more accessory ports (not shown) coupled to the controller 1502. The accessory port protocol may be selected, for example, from USB, serial, IEEE 1394 (i.e., Firewire), IEEE 802.3af (i.e., Power over Ethernet), IEEE 802.11-2016 (i.e., Wi-Fi), Bluetooth, Thunderbolt, or a combination of these interfaces. The one or more accessory ports are coupled to the controller 1502 such that the controller 1502 can control accessory devices connected by way of the accessory port based on the driver's movements.

Thus, when the position sensor 1504 is an image sensor and the controller 1502 is configured to apply a "body language" deciphering algorithm to the driver's motion patterns and gestures, the controller 1504 will be able to provide additional functionality based on the driver's movements and gestures, and the accessory devices connected through the accessory ports.

### Forward Blind Spot Assistance (FBSA)

The present disclosure provides the driver of the vehicle with a clear and expanded visual field of moving objects in intersections, without having to enter the intersection.

Many drivers face difficulty when crossing an intersection or exiting a parking spot, due to parked vehicles, walls, big objects or traffic blocking the driver's view. Consequently, a driver will need to enter the intersection to have better visibility. However, by increasing the driver's visibility along the intersection, the driver exposes a significant portion of the front of the vehicle to oncoming traffic. This could potentially lead to an accident as oncoming traffic may not have time and space to avoid the front of the vehicle intending to cross the intersection (See: FIGURE 9).

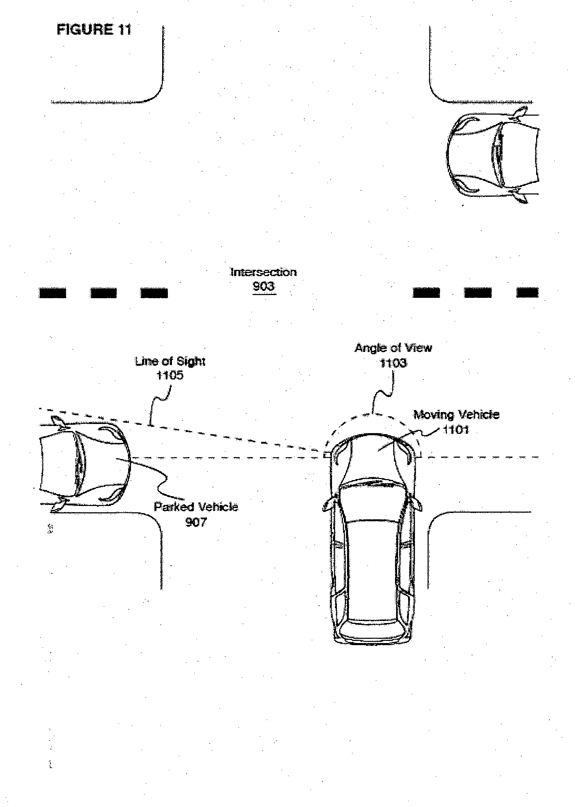

FIGURE 11 is a detailed enlargement of the driver's optical field on both sides of the intersection as the vehicle enters the intersection. By placing one or more cameras at the front end of a vehicle 1101, the driver will have an expansive, at least 180°, viewing angle 1103 within an intersection 903 without the vehicle 1101 having to enter the intersection 903 or proceed beyond parked vehicles 907. Consequently, the driver is at a significantly reduced risk of collision with oncoming traffic.

The present disclosure utilizes a driver's natural movement to lean forward in order to achieve a better view of the obstacles to trigger the operation of the vehicle collision avoidance system, i.e. the Forward Blind Spot Assistance system and the Rear View Parking Assistance system. Depending on whether the vehicle is in neutral, forward gear, or reverse gear will determine whether the present disclosure will activate the Forward Blind Spot Assistance system or the Rear View Parking Assistance system once the driver hasleaned forward by a predetermined amount.

The present disclosure consists of a camera system, which enlarges the driver's front visual field and a controller that activates the system by receiving signals by one or more sensors placed on the driver's headrest/seat or another appropriate place inside the vehicle. The controller who receives signals from the sensors recognizes the driver's motion relatively to the driver's headrest/seat and activates or deactivates the FBSA and displays a real-time video of the camera system, which is mounted on the vehicle's front hood/grill/bumper/lights/fenders in the vehicle's monitor, accordingly.

The FBSA contains a camera system with one the following layouts:
(1) a 180 degrees(minimum) camera for the front and side view;
(2) two cameras system, one for the right-front side of the vehicle and one for the left-front side of the vehicle; and
(3) a wide-angle view angle camera which provides a wide range picture, more than a monitor can show and the controller's software will choose the appropriate framing and zooming for the optimum results.

One or more sensors placed on the back of the seat (or other suitable location) detect the movement relative to the seat's back or headrest. When the driver moves his head/upper body or performs body gestures, the sensor perceives the "body language" of the driven and sends information to the controller, which compares the driver's movement to the predefined body gestures and determines how to react. The controller activates the camera system and monitor to provide the driver with a view of the front and side view.

The present disclosure is a system that provides optical feedback to the driver in case obstacles are blocking the view to the left or/and right side of the vehicle.

The FBSA helps to increase safety level by providing adequate visible field when the vehicle is approaching a junction or exiting parking spots or any other situation that the driver is not sure if it is safe to move forward.

The distance between the driver's head (eyes) and the vehicle's front end is a total of the distance between the driver's head and the lowest part of the windshield, plus the length of the hood plus the length of the grill/bumper. As a result, the driver's eyes are situated 1m to 3m (e.g., 2.6m for BMW Z4) behind the vehicle's front bumper. This distance varies by vehicle model and body type, as sport vehicles have long hood and the driver's position is low while Sport Utility Vehicles (SUV) tend to have a shorter hood and higher driving position.

Consequently, when an obstacle is blocking the driver's view, the driver is forced to drive forward until his head has clear side view, but at the same time part of the vehicle has moved into the junction with risk of side impact with, for example, a vehicle, bicycle or motorcycle.

In case of approaching a junction where visibility is limited due to obstacles, the driver's natural reaction is to lean forward to improve visibility by altering his view angle. As a result, the distance between driver's torso/head and the back of the seat is increased.

Referring again to FIGURE 15, the controller 1502 coupled to the position sensor 1504 installed inside the cabin monitors the natural reactions of the driver to determine the driver's intent. The position sensor 1504 provides measurements regarding the driver's position relatively to the vehicle seat/headrest. The position sensor 1504 may be a proximity sensor that registers distance between itself and an object (i.e., the driver) or the position sensor 1504 may be an image sensor, such as a CCD sensor or a CMOS sensor, configured to register the driver's posture, arm and hand gestures, and head movements. The image sensor may further be configured to identify eye movements.

When the position sensor 1504 is an image sensor, the controller 1502 can be configured to apply a "body language" deciphering algorithm to the driver's motion patterns and gestures. As a consequence, the controller 1504 will be able to provide additional functionality based on the driver's movements and gestures.

Moreover, the controller receives data from a speed sensor 1506 coupled to the driveshaft (not shown), or other appropriate structure, and a gear sensor 1508 coupled to the vehicle's transmission, or other appropriate structure. The speed sensor 1506 provides the controller 1502 with data regarding the vehicle's current velocity. The gear sensor 1510 provides data to the controller 1502 regarding whether the vehicle is in a reverse gear or a non-reverse gear (i.e., neutral or a forward gear). The controller 1502 performs calculations, factoring in the data from the position sensor 1504, the speed sensor 1506 and gear sensor 1510, to determine the driver's intention/need and engages the appropriate systems.

For example, if the gear sensor 1510 detects that the vehicle is in a non-reverse gear and the speed sensor 1506 detects the vehicle velocity to be below a speed threshold velocity of, for example 6 MPH, the controller 1502 will interpret a driver's forward leaning to be indicative of a situation in which an enhanced view of the forward of the vehicle is desired. Thus, the controller 1502 activates a forward camera 1514 and transmits images from the forward camera 1514 to a display 1512 situated so as to be viewable by the driver. However, if the speed sensor 1506 detects a vehicle velocity that exceeds the speed threshold, the controller 1502 will ignore the detected forward leaning of the driver.

While the above example refers to a speed threshold of 6 MPH, other appropriate values may be used instead as dictated both by practicality and local traffic laws relating to a driver interaction with a live video display. For example, a speed threshold of 10 MPH may be considered appropriate. Conversely, the speed threshold may need to be set to 0 MPH in certain municipalities. Therefore, the present disclosure contemplates a speed threshold having any value between, and including, 0 MPH and 10 MPH to be within the scope of the embodiments described herein.

Additionally, the present embodiment describes a forward camera 1514 which, for example, may be a single camera capable of providing a wide field of view, preferably at least 180° If the forward camera 1514 is a single wide-view camera, the camera should preferably be angled at a 45° downward angle. Alternatively, the forward camera 1514 may be an assembly of several cameras, e.g., two cameras configured to provide an overlapping 180° view of an intersection, or even a greater than 180° view.

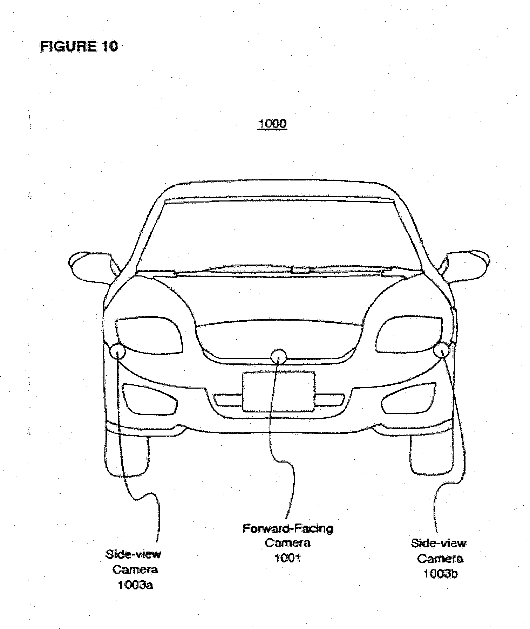

Referring to FIGURE 10, with a two-camera system, the cameras 1003a and 1003b may be positioned at opposite corners of the forward portion of the vehicle. Alternatively, a third camera 1001 may be positioned on the front of the vehicle 1000 centrally along the vehicle's long axis. The controller 1502 may include a signal-processing module (not shown) to edit and combine the video received from the forward camera 1514 to provide the driver with the best perception of the surroundings.

In an embodiment, the controller 1502 may be configured to select individual cameras of the forward camera 1514 in response to the driver's movements, such that visibility is increased on the left side, right side, or full 180° view.

Moreover, in an embodiment the controller 1502 communicates with a GPS system (not shown) so that when the driver is close to an intersection with a one-way street, the system activates only the camera showing the direction from which vehicles are expected to come.

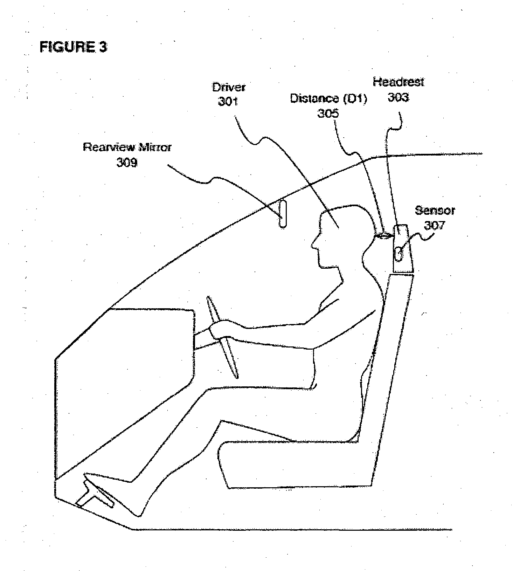

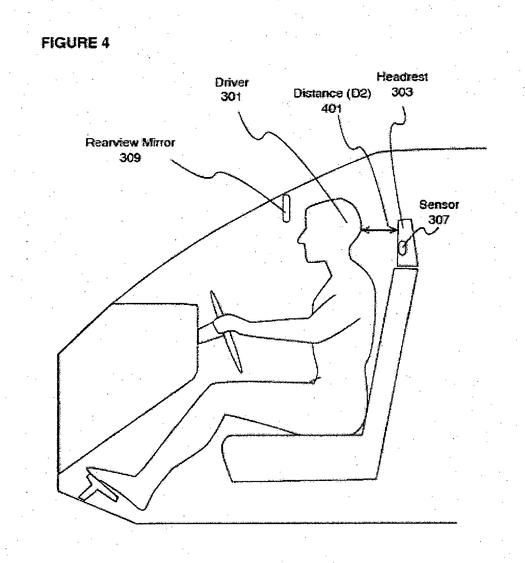

The driver's motions are categorized in driving mode [D] (FIGURE 3) in which a driver is seated with a normal posture; and the leaning forward mode [LFM] (FIGURE 4) in which the vehicle's speed is low (under 6 mph) or the vehicle does not move at all, reverse gear is not engaged, and the driver exhibits a forward leaning posture to gain better visibility.

When the driver is in driving mode [D] his head is placed close to the seat's headrest and the FBSA system is in standby mode. When the vehicle velocity is low (e.g., under 6 mph), reverse gear is not selected and the driver leans forward, the system activates the FBSA system and:
1) The front camera or side-front camera is activated, and
2) The vehicle's monitor input is switched to show video from the camera. i

The video provided by the front camera is a single plan showing left and right direction of the vehicle, covering at least 180 degrees, or a combination of two videos from two or more different video cameras (i.e., multi-camera configuration), one showing towards the left side of the vehicle and the other towards the right side of the vehicle. Thus, with respect to the present disclosure, it is understood that reference to a "front camera" refers to any configuration of one or more forward positioned cameras, and is not intended to limit any embodiment described herein to a singular front camera.

The multi-camera configuration is more effective in cases where the vehicle is approaching the intersection at an angle rather than perpendicular to the intersecting street. The multi-camera configuration eliminates the risk of a blind spot on the side that the vehicle and the intersecting street form the smaller entering corner.

Referring to FIGURES 3 and 4, when the driver 301 is approaching an intersection or exiting a parking spot and nearby obstacles are blocking the view, the driver will tend to move towards the steering wheel. This is a natural movement of the driver 301. The system uses this natural movement as a body gesture, which activates the controller to engage the camera and monitor. The result of the driver 301 leaning forward is that the distance between the head 301 and the headrest 401 is increased.

The position sensor 307, which can be placed on/under the headrest 303, or in another suitable position inside the vehicle's cabin, recognizes the movement of the driver 301 and activates the front camera which provide the driver with improved visibility of the intersection without the vehicle's grill significantly crossing the road line.

The position sensor 307 can be a proximity sensor, a camera or another suitable sensor as known in the art, which recognizes the alteration of the distance of the driver 301.

When the maneuver ends, the driver's head moves back to the deactivation threshold position and the FBSA is set to standby mode. The "home" screen of the vehicle's multimedia system is restored and the front camera is deactivated.

### Rear View Parking Assistance (RVPA)

Another embodiment of the present disclosure is a Rear View Parking Assistance (RVPA) that alters a driver's visible field, according to the driver's needs, when driving in reverse or driving in reverse gear for a parking maneuver.

The RVPA system may implement the rear cameras using several methods, such as:
(1) a two-camera system, one for the distant rear view and the other one for the closer rear obstacles;
(2) a camera with two signal outputs, one for the distant rear view and the other one for the closer rear obstacles; and
(3) a wide-angle view angle camera which provides a wide range picture, more than a monitor can show, with the controller selecting the appropriate framing and zooming for the optimum results.

When the car moves in reverse, the rear camera provides a wide view of the rear side of the car, giving the driver the ability to see remote obstacles. When the vehicle approaches the obstacle in a closer distance, the controller alters the view's framing and the driver may evaluate accurately the distance between the car's rear bumper and the obstacle(s).

The combination of altering the rear camera(s)' view angle and the zooming of the rear image assists the driver to perform a reverse maneuver safer and faster by providing him with an overall visibility.

Referring back to FIGURE 15, the RVPA is a system which monitors the driver's position/motion to determine which visible field is more helpful for the driver. Depending on the driver's movements, the controller 1502 adjusts the tilting angle of the one or more side-view mirrors by controlling the side-view mirror adjustment motors 1520 in order to increase the driver's visibility on the side and behind of the vehicle.

The driver's motions are categorized in driving mode [D], which consists of the driving forward [DF] mode, the driving backwards [DB] mode, and the reverse & parking mode [RP].

When the driver is in driving mode [D] his head is placed close to the seat's headrest, as shown in FIGURE 3, and the gear sensor 1510 detects that the vehicle is in a forward gear. In this situation, the RVPA system is placed in standby mode by the controller 1502. In the embodiment of FIGURE 3, the driver's head is shown to be located at a distance D1 designated by reference numeral 305.

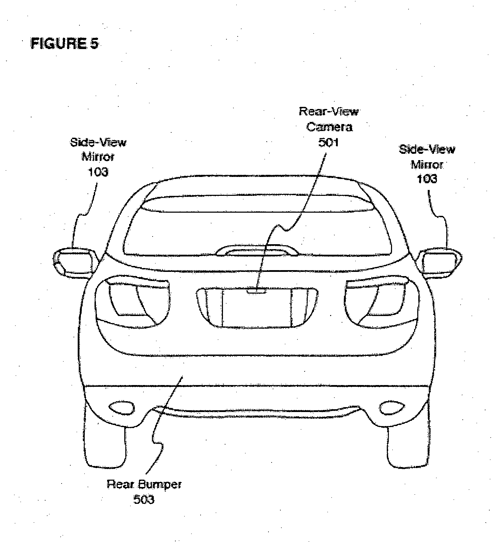

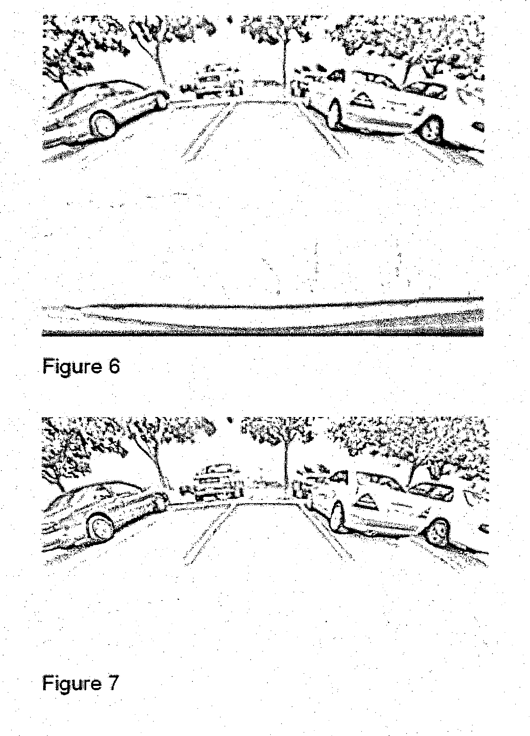

When the driver places the vehicle in a reverse gear, the gear sensor 1510 registers the change and provides the data to the controller 1502. The controller 1502 activates the rear camera (Normal-view) 1518 in order to increase the driver's visibility behind the vehicle. The rear camera (Normal-view) 1518 shows an image from the rear bumper 503 (See: FIGURE 5) to the direction behind the vehicle as shown in FIGURES 6 and 7.

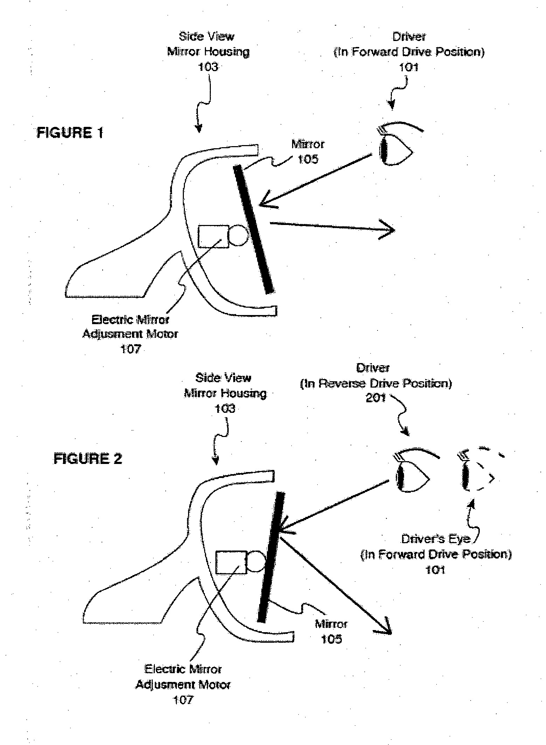

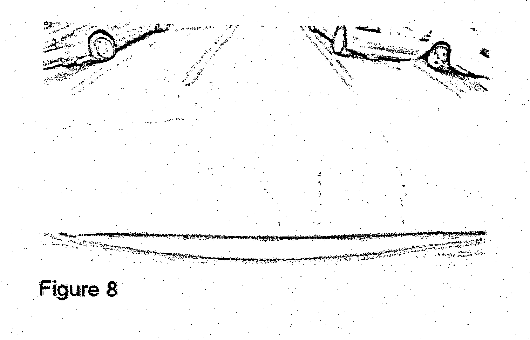

When the driver wishes to increase the side visibility of the vehicle, the driver leans forward (See: FIGURE 4), moving his/her body closer to the steering wheel such that the driver's head is located at a distance D2, designated by reference numeral 401, which is greater than distance D1 . Thus, the distance 401 between the driver's head and the headrest 303 is increased. The position sensor 307, placed on the headrest 303 or to other suitable place inside the vehicle's cabin, detects the movement of the driver 301, causing the controller 1502 to activate the side-view mirror adjustment motors 1520 to alter the tilt of the one or more side-view mirrors, as shown in FIGURE 2. The altered tilt of the mirror changes the driver's view angle on the sides of the vehicle, thereby improving the visibility of the driver 301 in a reverse parking maneuver. Additionally, the controller, 1502 switches video feed to the display 1512 from the rear camera (Normal-view) 1518 to the rear camera (Wide-view) 1516. The rear camera (Wide-view) 1516 provides a view of the rear of the vehicle closer to the bumper, such as shown in FIGURE 8.

The position sensor 307 can be a proximity sensor, a camera or another sensor, which recognizes the alteration of the distance of the driver's head 301. More specifically, the sensor 307 is placed within the vehicle, e.g., inside the vehicle's cabin, and is configured to determine the driver's head position relative to a predetermined or designated point in the vehicle. In the embodiment shown in FIGURES 3 and 4, the designated point is a surface of the headrest 303 as described above. The position of the sensor 307 depends on the type of vehicle and/or the vehicle manufacturer.

When the reverse or the parking maneuver ends, the driver 301 deselects the reverse gear, the RVPA is set to standby mode, the side mirrors are restored in their original position and the rear camera 501 is deactivated.

The present embodiment describes a rear camera (Normal-view) 1518 and a rear camera (Wide-view) 1516 as separate cameras. However, a single camera can provide both the wide-view and the narrow-view functionalities, either by electronically controlled optics or via software-based image processing to crop a wide-view image such that only the i normal-view is provided when appropriate. The zooming between the wide-view image and the normal-view image can be proportional to the degree of forward movement of the driver beyond the activation threshold.

In an embodiment, the controller 1502 provides a wide view and a narrow view to the display 1512 simultaneously, such that the video from both the rear camera (Wide-view) 1516 and the rear camera (Normal-view) 1518 are displayed in a split-screen view on the display 1512.

Referring to FIGURES 1 and 2, the vehicle's mirror tilting mechanism 107 can be adjusted in two different positions, the driving mode [D], shown in FIGURE 1, or the reverse and parking mode [RP], shown in FIGURE 2. Alternatively, mirror tilting can be proportional to the driver's head distance from the headrest 303.

In FIGURE 1, the view angle of the driver 101 is illustrated when he/she is driving forward or backwards. The mirror tilting mechanism 107 has been set to the default settings that the driver 101 has arranged for everyday use.

In-FIGURE 2, the difference in the driver's view angle is depicted when the driver changes from the driving position [D] to the reverse parking position [RP] which means that driver has pulled closer to the steering wheel in order to see the obstacles which are not visible when in the driving mode [D].

The display disclosed in the embodiments above may be the display utilized for vehicle navigation, a display dedicated to providing the vehicle collision avoidance system, or any other appropriately configured video display device. In an embodiment, the display may be incorporated into the rearview mirror 309, shown in FIGURE 3. The display may utilize any suitable display technology known to one of ordinary skill in the art, for example OLED, LED, and ePaper, as appropriate.

### Combined FBSA & RVPA

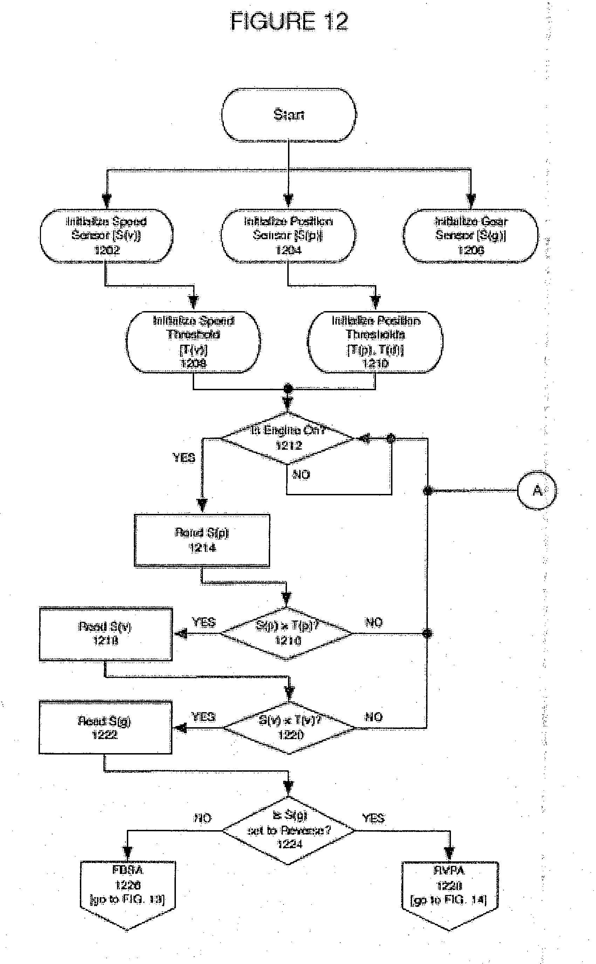

Referring to FIGURE 12, an embodiment of the present disclosure performs the process illustrated therein. In the present embodiment, a process for providing vehicle collision avoidance begins once a driver turns the ignition key to the accessory position, with initialization of a vehicle speed sensor **(S₍ᵥ₎)** at step 1202. In addition, a position sensor **(S₍ₚ₎)** is initialized in step 1204. The position sensor **(S₍ₚ₎)** is configured to determine the position of the driver's head with respect to a predefined point on the driver's seat. As described above, in an embodiment of the present disclosure, the predefined point is located on the driver's headrest. Further, a gear sensor **(S_{(g)})** is initialized at step 1206. The gear sensor **(S_{(g)})** determines the gear that the vehicle is in. Specifically, the gear sensor **(S_{(g)})** determines whether the vehicle is in a reverse gear or a non-reverse gear (i.e., neutral or a forward gear).

The process proceeds to step 1208 where the process initializes a speed threshold **(T₍ᵥ₎)** above which the process will discontinue displaying camera video to the driver. The purpose of the speed threshold **(T₍ᵥ₎)** is to avoid distracting the driver during normal driving. Moreover, many states in the United States of America prohibit displaying video feeds to a driver during normal driving as this is a significant distraction that can lead to collisions. Thus, the speed threshold **(T₍ᵥ₎)** is set to a value indicative of situations involving parking, pulling out of a parking space, cautiously entering an intersection or other similar scenarios. For example, in one embodiment the speed threshold **(T₍ᵥ₎)** may be set to any value below 10 miles per hour, and in another embodiment the speed threshold **(T₍ᵥ₎)** may be set to 5 miles per hour.

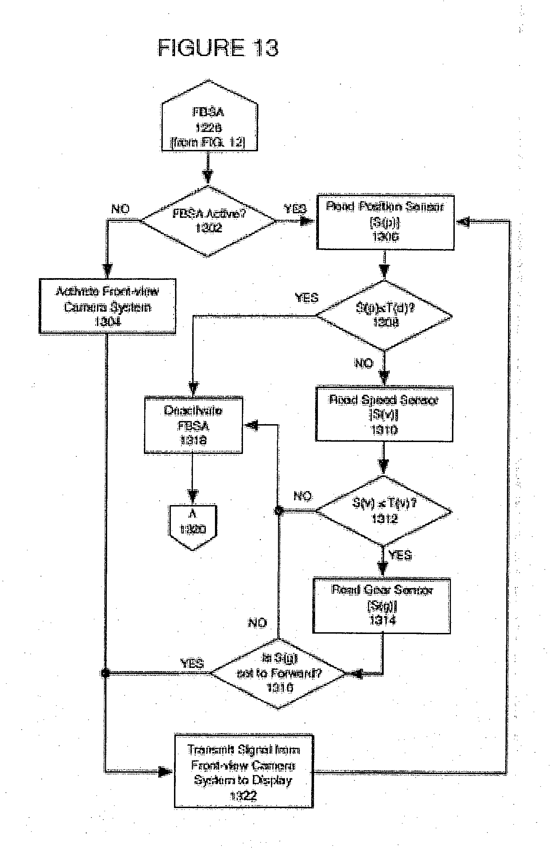

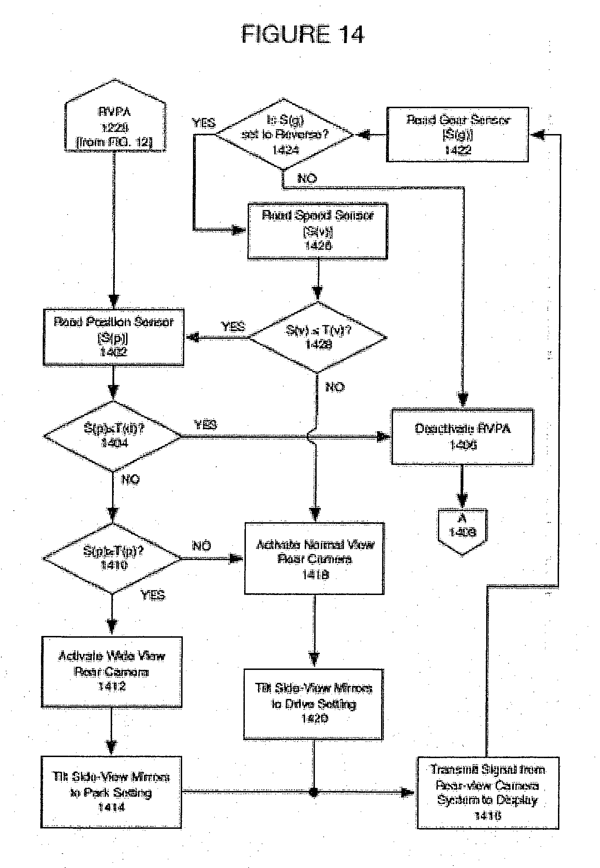

The process then proceeds to initialize position thresholds **(T₍ₚ₎, T_{(d)})** in step 1210. The position activation threshold **(T₍ₚ₎)** defines the minimum distance between the driver's head and the predefined point on the driver's seat at which the process will activate either the Forward Blind Spot Assistance system (See: Figure 13) or the Rear View Parking Assistance System (See: Figure 14). The position deactivation threshold **(T_{(d)}),** on the other hand, defines a maximum distance from the predefined point on the driver's seat at which the process will deactivate the Forward Blind Spot Assistance system or the Rear View Parking Assistance System. Thus, the position deactivation threshold **(T_{(d)})** has a value less than the position activation threshold **(T₍ₚ₎).**

Consequently, when a driver leans forward such that the driver's head surpasses the position activation threshold **(T₍ₚ₎),** the collision avoidance system activates in accordance with the present disclosure and remains active until the driver resumes a normal driving position once again as determined by the driver's head being closer to the predefined point on the driver's seat than position deactivation threshold **(T_{(d)}).**

Upon completing the initialization steps 1202 through 1210, the process checks whether the vehicle engine is on in step 1212. If the engine is not on, the process enters a loop that either continuously or intermittently performs the check in step 1212. However, if the engine is on, the process proceeds to step 1214 where the position sensor (S₍ₚ₎) is read. In step 1216, the value read from the position sensor (S₍ₚ₎) is compared to the position activation threshold (T₍ₚ₎). If the value read from the position sensor (S₍ₚ₎) is less than the position activation threshold (T₍ₚ₎), the process enters a loop returning back to step 1212.

Alternatively, if the value read from the position sensor (S₍ₚ₎) is greater than or equal to the position activation threshold **(T₍ₚ₎),** the processes continues to step 1218. At step 1218 the process reads the value from the speed sensor **(S₍ᵥ₎).** In step 1220 the value read from the speed sensor **(S₍ᵥ₎)** is compared to the speed threshold **(T₍ᵥ₎).** If the value read from the speed sensor **(S₍ᵥ₎)** is greater than the speed threshold **(T₍ᵥ₎),** the process enters a loop returning back to step 1212.

However, if in step 1220, the value read from the speed sensor **(S₍ᵥ₎)** is less than or equal to the speed threshold **(T₍ᵥ₎),** the processes continues to step 1222. At step 1222, the gear position is read from the gear sensor **(S_{(g)}),** which is used to determine if the vehicle is in a forward gear or a reverse gear at step 1224. If the vehicle is in reverse gear, the process proceeds to step 1228 to activate the Rear. View Parking Assistance System, which is further described below in reference to FIGURE 14. However, if the vehicle is not in reverse gear, the process proceeds to step 1226 to activate the Forward Blind Spot Assistance system, which is further described below in reference to FIGURE 13.

As apparent to one of ordinary skill in the art, the various sensors and activations may be arranged in alternative configurations as appropriate for a particular implementation. For example, the reverse gear check (step 1224) may be provided prior to the engine check (step 1212) such that the system immediately activates the reverse view camera upon placing the vehicle in reverse gear regardless of the status of the engine. Moreover, two reverse gear checks may be provided one at a position prior to the engine check (e.g., between steps 1210 and 1212) and one at the position shown in FIGURE 12.

Further, the reverse gear check, as well as any or all of the other sensors checks, may operate in parallel, i.e., simultaneously and continuously, such that the present invention reacts to changes received from the sensors as they occur rather than being limited to a sequential process flow as shown in FIG. 12 through 14. The above modifications, as well as any other modification as known to one of ordinary skill in the art, are not considered as departing from the present disclosure.

Referring to FIGURE 13, in the case where the process described above with reference to FIGURE 12 determines that the vehicle is not in reverse gear in step 1224, the process continues to step 1226 where the Forward Blind Spot Assistance system is activated. Activation of the Forward Blind Spot Assistance system includes the step 1302 where the process determines if the Forward Blind Spot Assistance system is already active. If the Forward Blind Spot Assistance system is not already active, then the front-view camera system is activated in step 1304 and the video signals therefrom are transmitted to a display viewable by the driver in step 1322.

However, if the Forward Blind Spot Assistance system is already active in step 1302, the process reads the value from the position sensor **(S₍ₚ₎)** in step 1306. In step 1308 the value from the position sensor **(S₍ₚ₎)** is compared to the position deactivation threshold **(T_{(d)}).** If the value of the position sensor **(S₍ₚ₎)** is less than or equal to the position deactivation threshold **(T_{(d)}),** the process proceeds to step 1318 where the Forward Blind Spot Assistance system is deactivated. Deactivation of the Forward Blind Spot Assistance system includes deactivating the front-view camera as well as any other supporting systems. Once the Forward Blind Spot Assistance system is deactivated the process continues to step 1320, which loops back to step 1212 in FIGURE 12.

However, if the value from the position sensor **(S₍ₚ₎)** is greater than or exceeds the position deactivation threshold **(T_{(d)})** in step 1308, the process continues to step 1310 where the value of the speed sensor **(S₍ᵥ₎)** is read. The process then compares the value of the speed sensor **(S₍ᵥ₎)** to the speed threshold **(T₍ᵥ₎)** in step 1312. If the value of the speed sensor **(S₍ᵥ₎)** exceeds the speed threshold **(T₍ᵥ₎),** the process proceeds to step 1318 where the Forward Blind Spot Assistance system is deactivated. Once the Forward Blind Spot Assistance system is deactivated the process continues to step 1320, which loops back to step 1212 in FIGURE 12.

However, if the value from the speed sensor **(S₍ᵥ₎)** is less than or equal to the speed threshold **(T₍ᵥ₎)** in step 1312, the process continues to step 1314 where the value of the gear sensor **(S_{(g)})** is read. The process then determines if the gear sensor **(S_{(g)})** indicates that the vehicle is in a forward gear, or in neutral, in step 1316. If the vehicle is determined to be in a reverse gear (i.e., not in either neutral or a forward gear), the process proceeds to step 1318 where the Forward Blind Spot Assistance system is deactivated. Once the Forward Blind Spot Assistance system is deactivated the process continues to step 1320, which loops back to step 1212 in FIGURE 12.

If the vehicle is determined to be in a non-reverse gear (i.e., either neutral or a forward gear), the process proceeds to step 1322 where the video signals from the front view camera system continue to be transmitted to a display viewable by the driver, and the process continues as described above.

Referring to FIGURE 14, in the case where the process described above with reference to FIGURE 12 determines that the vehicle is in reverse gear in step 1224, the process continues to step 1228 where the Rear View Parking Assistance system is activated. Activation of the Rear View Parking Assistance system includes the step 1402 where the process reads the position sensor **(S₍ₚ₎).**

After reading the position sensor **(S₍ₚ₎)** in step 1402, the process compares the value of the position sensor **(S₍ₚ₎)** against the position deactivation threshold **(T_{(d)})** in step 1404. If the position sensor **(S₍ₚ₎)** is less than or equal to the position deactivation **threshold (T_{(d)})** in step 1404, the process proceeds to step 1406 where the Rear View Parking Assistance system is deactivated and the process continues to step 1408 returning to step 1212 in FIGURE 12. When the Rear View Parking Assistance system is deactivated, the side view mirrors are readjusted back to a normal driving configuration and the wide view and the normal view rear cameras are deactivated as well.

Alternatively, if the position sensor **(S₍ₚ₎)** is greater than the position deactivation threshold **(T_{(d)})** in step 1404, the process proceeds to step 1410. At step 1410, the value of the position sensor **(S₍ₚ₎)** is compared against the position activation threshold **(T₍ₚ₎).** If the position sensor **(S₍ₚ₎)** is greater than or equal to the position activation threshold **(T₍ₚ₎)** then the process continues to step 1412. At step 1412 the process activates the wide view rear camera. The wide view rear camera allows the driver to visualize the area of the vehicle near the rear bumper. Next, the process controls the electric mirror adjustment motor 107 (see: FIGURE 2), situated in a side-view mirror housing 103, to adjust the side-view mirror 105 to a park setting in step 1414. In the park setting, the side-view mirror is aimed such that the driver 201 has a clear view of the ground at the rear side of the vehicle. The present embodiment may include one or more side-view mirrors. The process then proceeds to step 1416 where the rear-view camera system transmits video signals to a display viewable by the driver.

Additionally, the process reads the state of the gear sensor **(S_{(g)})** in step 1422. Based on the state of the gear sensor **(S_{(g)})** the process determines if the vehicle is still in reverse gear in step 1424. If the vehicle is no longer in reverse gear the process proceeds to step 1406 and deactivates the Rear View Parking Assistance system. When the Rear View Parking Assistance system is deactivated, the side view mirrors are readjusted back to a normal driving configuration and the wide view and normal view rear cameras are deactivated as well. The process then continues to step 1408, which loops the process back to step 1212 in FIGURE 12. Alternatively, if the vehicle remains in reverse gear as i determined in step 1424, the process continues onto step 1402 and proceeds as described above.

If the position sensor **(S₍ₚ₎)** is less than the position activation threshold **(T₍ₚ₎)** then the process continues to step 1418. At step 1418 the process activates the normal view rear camera. The normal view rear camera allows the driver to visualize obstacles in a wide area behind the vehicle that could cause a collision while the vehicle is backing up. Next, the process controls the electric mirror adjustment motor 107 (see: FIGURE 1), situated in a side-view mirror housing 103, to adjust the side-view mirror 105 to a default drive setting in step 1420. In the default drive setting the side-view mirror 105 provides the driver 101 with a clear view along the side of the vehicle. The process proceeds to step 1416 where the rear-view camera system transmits video signals to the display viewable by the driver.

Additionally, the process reads the state of the gear sensor **(S_{(g)})** in step 1422. Based on the state of the gear sensor **(S_{(g)})** the process determines if the vehicle is still in reverse gear in step 1424. If the vehicle is no longer in reverse gear the process proceeds to step 1406 and deactivates the Rear View Parking Assistance system. When the Rear View Parking Assistance system is deactivated, the side view mirrors are readjusted back to a normal driving configuration and the wide view and the normal view rear cameras are deactivated as well. The process then continues to step 1408, which loops the process back to step 1212 in FIGURE 12. Alternatively, if the vehicle remains in reverse gear as determined in step 1424, the process continues onto step 1426.

At step 1426, the process reads the state of the speed sensor **(S₍ᵥ₎).** Based on the state of the speed sensor **(S₍ᵥ₎)** the process determines if the vehicle is still below the speed threshold **(T₍ᵥ₎)** in step 1428. If the vehicle is no longer below the speed threshold **(T₍ᵥ₎),** the process proceeds to step 1418. If the vehicle speed is over the speed threshold **(T₍ᵥ₎),** the system switches to normal view rear camera. Alternatively, if the vehicle remains below the speed threshold **(T₍ᵥ₎)** as determined in step 1428, the process continues onto step 1402 and proceeds as described above.

The Rear View Parking Assistance system continues operating until the vehicle is shifted out of reverse gear as determined in step 1424 or the position sensor **(S₍ₚ₎)** returns a value less than or equal to the position deactivation threshold **(T_{(d)})** in step 1404.

Those of ordinary skill would appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the exemplary embodiments of the disclosure.

The various illustrative logical blocks, modules, and circuits described in connection with the embodiments disclosed herein may be implemented or performed with a general purpose processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blue-ray disc where disks usually reproduce data magnetically, while discs reproduce data optically with lasers. Combinations of the above should also be included within the scope of computer-readable media.

## Claims

1. A vehicle collision avoidance system comprising:
a rear-view camera (1516) disposed on a vehicle and arranged to monitor at least one collision prone region adjacent to said vehicle;
a first sensor (307) positioned within said vehicle and arranged to determine a driver's head position relative to a designated point in said vehicle;
a display (1512) disposed in view of said driver, said display coupled to said rear-view camera (1516); and
a controller (1502) configured to control operation of said sensor (307), said rear-view camera (1516) and said display (1512), the controller (1502) being configured to activate said display (1512) and said rear-view camera (1516) to display said at least one collision prone region adjacent to said vehicle when said sensor detects that said driver's head is beyond a threshold distance from said designated point,
wherein said rear-view camera (1516) comprises a wide field of view camera disposed on a rear area of said vehicle and arranged to image an area near a rear bumper of the vehicle,
**characterized in that**
the vehicle collision avoidance system further comprises a normal field of view camera (1518) disposed on a rear area of said vehicle and arranged to image the area behind said vehicle, said normal field of view camera being coupled to said display and operationally controlled by said controller (1502).

2. The vehicle collision avoidance system as in claim 1, wherein said wide field of view camera (1516) and said normal field of view camera (1518) are provided in a single rear-view camera with a field of view adjustable by said controller (1502).

3. The vehicle collision avoidance system as in claim 1, further comprising an electronically adjustable side-view mirror (105), wherein said side-view mirror (105) is controllably adjusted by said controller (1502) in response to said driver's head position.

4. The vehicle collision avoidance system as in claim 1, further comprising a forward camera (1514), disposed at a forward area of said vehicle and arranged to image a region encompassing both sides of said vehicle forward of a front of said vehicle.

5. A vehicle collision avoidance system according to claim 4,
wherein said first sensor (307) is configured to determine a distance between the driver and a surface of a seat;
the vehicle collision avoidance system further comprising
a second sensor (1508) configured to detect a transmission gear selection;
a third sensor (1506) configured to sense a traveling velocity of said vehicle;
the forward camera (1514) being positioned at a front-most position on said vehicle and oriented to image an area encompassing at least 180° around the front of said vehicle;
the rear-view camera (1516) being positioned at a rear-most position on said vehicle;
the display (1512) being adapted to display video to said driver;
the controller (1502) being in electrical communication with said first sensor, said second sensor, said third sensor, said forward camera system, said rear-view camera system, and said display,
the controller (1502) being configured to provide video feeds from said forward camera and said rear-view camera based on an analysis of data provided to the controller by said first sensor, said second sensor, said third sensor.

6. The system as in claim 5, wherein said analysis of data comprises the first, second and third sensors being configured to:
determine if said distance between said driver and said surface of said seat exceeds a first threshold;
detect if said transmission gear is a reverse gear; and
sense if said traveling velocity of said vehicle is below a speed threshold velocity.

7. The system as in claim 6, wherein said controller (1502) selectively provides said video feed from said forward camera to said display when said distance between said driver and said surface of said seat exceeds said first threshold, said transmission gear is not in said reverse gear, and said traveling velocity of said vehicle is below the speed threshold velocity.

8. The system as in claim 6, wherein said controller selectively provides said video feed from said rear-view camera to said display when said distance between said driver and said surface of said seat exceeds said first threshold, said transmission gear is in said reverse gear, and said traveling velocity of said vehicle is below the speed threshold velocity.

9. The system as in claim 6, further comprising a side-view mirror adjustment motor controlled by said controller, wherein
said controller drives said side-view mirror adjustment motor to adjust a side-view mirror to a default position when said traveling velocity of said vehicle is above the speed threshold velocity, and said controller drives said side-view mirror adjustment motor to adjust a side-view mirror to a reverse parking position when said distance between said driver and said surface of said seat exceeds said first threshold, said transmission gear is in said reverse gear, and said traveling velocity of said vehicle is below the speed threshold velocity.

10. A vehicle collision avoidance method for a motor vehicle, comprising the steps of
detecting a body movement by a driver;
evaluating said body movement to determine if said body movement exceeds a threshold distance; and
activating a collision avoidance process when said body movement exceeds said threshold distance,
wherein said body movement is a forward-leaning movement, and said threshold distance is measured from a driver's seat headrest;
said collision avoidance process further comprising the steps of:
detecting whether said motor vehicle is in a non-reverse gear;
activating a front-view camera when said motor vehicle is in said non-reverse gear; and,
transmitting a video signal from said front-view camera to a display viewable by said driver,
wherein said front-view camera has at least a 180° field of view forward of said motor vehicle.

11. The method as in claim 10, wherein said front- view camera comprises a plurality of cameras configured to provide said 180° field of view.

12. The method as in claim 10, wherein said collision avoidance process further comprising the steps of:
detecting whether said motor vehicle is in a reverse gear;
activating a rear-view camera when said motor vehicle is in said reverse gear; and transmitting a video signal from said rear-view camera to a display viewable by said driver.

13. The method as in claim 12, wherein said rear-view camera is configured to provide view behind said motor vehicle.

14. The method as in claim 13, further comprising the steps of:
processing said video signals to provide a normal view to said driver when said body motion is less than said threshold distance and greater than a second threshold distance; and
processing said video signals to provide a wide angle view to said driver when said body motion exceeds said threshold distance.

15. The method as in claim 14, further comprising the steps of:
adjusting a side-view mirror to provide a side parking view to said driver when said body motion exceeds said threshold distance; and
adjusting said side-view mirror to provide a normal driving view to said driver when said body motion is less that said threshold distance and greater than said second threshold distance.

## Patentansprüche

1. Fahrzeugkollisionsvermeidungssystem, umfassend:
eine Rückfahrkamera (1516), die an einem Fahrzeug angeordnet und ausgelegt ist, um mindestens einen kollisionsgefährdeten Bereich neben dem Fahrzeug zu überwachen;
einen ersten Sensor (307), der innerhalb des Fahrzeugs angeordnet und angeordnet ist, um die Kopfposition eines Fahrers relativ zu einem bezeichneten Punkt in dem Fahrzeug zu bestimmen;
eine Anzeige (1512), die im Blickfeld des Fahrers angeordnet ist, wobei die Anzeige mit der Rückfahrkamera (1516) gekoppelt ist; und
eine Steuerung (1502), die konfiguriert ist, um den Betrieb des Sensors (307), der Rückfahrkamera (1516) und der Anzeige (1512) zu steuern, wobei die Steuerung (1502) konfiguriert ist, um die Anzeige (1512) und die Rückfahrkamera (1516) zu aktivieren, um den mindestens einen kollisionsgefährdeten Bereich neben dem Fahrzeug anzuzeigen, wenn der Sensor erkennt, dass sich der Kopf des Fahrers jenseits eines Schwellenabstands vom bezeichneten Punkt befindet,
wobei die Rückfahrkamera (1516) eine Kamera mit weitem Sichtfeld umfasst, die an einem hinteren Bereich des Fahrzeugs angeordnet und ausgelegt ist, um einen Bereich in der Nähe einer hinteren Stoßstange des Fahrzeugs abzubilden,
**dadurch gekennzeichnet, dass**
das Fahrzeugkollisionsvermeidungssystem ferner eine Kamera mit normalem Sichtfeld (1518) umfasst, die an einem hinteren Bereich des Fahrzeugs angeordnet und ausgelegt ist, um den Bereich hinter dem Fahrzeug abzubilden, wobei die Kamera mit normalem Sichtfeld mit der Anzeige gekoppelt ist und betriebsmäßig von der Steuerung (1502) gesteuert wird.

2. Fahrzeugkollisionsvermeidungssystem nach Anspruch 1, wobei die Kamera (1516) mit weitem Sichtfeld und die Kamera (1518) mit normalem Sichtfeld in einer einzigen Rückfahrkamera mit einem von der Steuerung (1502) einstellbaren Sichtfeld bereitgestellt sind.

3. Fahrzeugkollisionsvermeidungssystem nach Anspruch 1, ferner umfassend einen elektronisch einstellbaren Seitenspiegel (105), wobei der Seitenspiegel (105) von der Steuerung (1502) als Reaktion auf die Kopfposition des Fahrers steuerbar eingestellt wird.

4. Fahrzeugkollisionsvermeidungssystem nach Anspruch 1, ferner umfassend eine vordere Kamera (1514), die in einem vorderen Bereich des Fahrzeugs angeordnet und ausgelegt ist, um einen Bereich abzubilden, der beide Seiten des Fahrzeugs vor einer Vorderseite des Fahrzeugs umfasst.

5. Fahrzeugkollisionsvermeidungssystem nach Anspruch 4,
wobei der erste Sensor (307) konfiguriert ist, um einen Abstand zwischen dem Fahrer und einer Oberfläche eines Sitzes zu bestimmen;
wobei das Fahrzeugkollisionsvermeidungssystem ferner umfasst
einen zweiten Sensor (1508), der konfiguriert ist, um eine Getriebegangauswahl zu erkennen;
einen dritten Sensor (1506), der konfiguriert ist, um eine Fahrgeschwindigkeit des Fahrzeugs zu erfassen;
wobei die Frontkamera (1514) an einer vordersten Position an dem Fahrzeug positioniert und ausgerichtet ist, um einen Bereich abzubilden, der mindestens 180° um die Vorderseite des Fahrzeugs umschließt;
wobei die Rückfahrkamera (1516) an einer hintersten Position an dem Fahrzeug positioniert ist;
wobei die Anzeige (1512) ausgelegt ist, um Video für den Fahrer anzuzeigen;
wobei die Steuerung (1502) in elektrischer Verbindung mit dem ersten Sensor, dem zweiten Sensor, dem dritten Sensor, dem Frontkamerasystem, dem Rückfahrkamerasystem und der Anzeige steht,
wobei die Steuerung (1502) konfiguriert ist, um basierend auf einer Analyse von Daten, die der Steuerung von dem ersten Sensor, dem zweiten Sensor und dem dritten Sensor bereitgestellt werden, Videoeinspeisungen von der Frontkamera und der Rückfahrkamera bereitzustellen.

6. System nach Anspruch 5, wobei die Datenanalyse den ersten, den zweiten und den dritten Sensor umfasst, die konfiguriert sind zum:
Bestimmen, ob der Abstand zwischen dem Fahrer und der Oberfläche des Sitzes einen ersten Schwellenwert überschreitet;
Erkennen, ob der Getriebegang ein Rückwärtsgang ist; und
Erfassen, ob die Fahrgeschwindigkeit des Fahrzeugs unter einer Drehzahlschwellengeschwindigkeit liegt.

7. System nach Anspruch 6, wobei die Steuerung (1502) die Videoeinspeisung von der Frontkamera selektiv an die Anzeige bereitstellt, wenn der Abstand zwischen dem Fahrer und der Oberfläche des Sitzes den ersten Schwellenwert überschreitet, der Getriebegang nicht im Rückwärtsgang ist und die Fahrgeschwindigkeit des Fahrzeugs unterhalb der Drehzahlschwellengeschwindigkeit liegt.

8. System nach Anspruch 6, wobei die Steuerung selektiv die Videoeinspeisung von der Rückfahrkamera zu der Anzeige bereitstellt, wenn der Abstand zwischen dem Fahrer und der Oberfläche des Sitzes den ersten Schwellenwert überschreitet, das Getriebe im Rückwärtsgang ist und die Fahrgeschwindigkeit des Fahrzeugs unter der Geschwindigkeitsschwellengeschwindigkeit liegt.

9. System nach Anspruch 6, ferner umfassend einen Seitenspiegel-Einstellmotor, der von der Steuerung gesteuert wird, wobei
die Steuerung den Seitenspiegel-Einstellmotor antreibt, um einen Seitenspiegel auf eine Standardposition einzustellen, wenn die Fahrgeschwindigkeit des Fahrzeugs über der Drehzahlschwellengeschwindigkeit liegt, und die Steuerung den Seitenspiegel-Einstellmotor antreibt, um einen Seitenspiegel in eine Rückwärtsparkposition einzustellen, wenn der Abstand zwischen dem Fahrer und der Oberfläche des Sitzes den ersten Schwellenwert überschreitet, der Getriebegang im Rückwärtsgang ist und die Fahrgeschwindigkeit des Fahrzeugs unter der Drehzahlschwellengeschwindigkeit liegt.

10. Fahrzeugkollisionsvermeidungsverfahren für ein Kraftfahrzeug, umfassend die folgenden Schritte
Erkennen einer Körperbewegung von einem Fahrer;
Auswerten der Körperbewegung, um zu bestimmen, ob die Körperbewegung einen Schwellenabstand überschreitet; und
Aktivieren eines Kollisionsvermeidungsprozesses, wenn die Körperbewegung den Schwellenabstand überschreitet,
wobei die Körperbewegung eine nach vorne gelehnte Bewegung ist und der Schwellenabstand von einer Kopfstütze eines Fahrersitzes aus gemessen wird;
wobei der Kollisionsvermeidungsprozess ferner die folgenden Schritte umfasst:
Erkennen, ob sich das Kraftfahrzeug in einem Nicht-Rückwärtsgang befindet;
Aktivieren einer Frontsichtkamera, wenn sich das Kraftfahrzeug im Nicht-Rückwärtsgang befindet; und
Übertragen eines Videosignals von der Frontsichtkamera an eine Anzeige, die von dem Fahrer sichtbar ist,
wobei die Frontsichtkamera mindestens ein Sichtfeld von 180° vor dem Kraftfahrzeug aufweist.

11. Verfahren nach Anspruch 10, wobei die Frontsichtkamera eine Vielzahl von Kameras umfasst, die konfiguriert sind, um das 180°-Sichtfeld bereitzustellen.

12. Verfahren nach Anspruch 10, wobei der Kollisionsvermeidungsprozess ferner die folgenden Schritte umfasst:
Erkennen, ob sich das Kraftfahrzeug in einem Rückwärtsgang befindet;
Aktivieren einer Rückfahrkamera, wenn sich das Kraftfahrzeug im Rückwärtsgang befindet; und Übertragen eines Videosignals von der Rückfahrkamera an eine Anzeige, die von dem Fahrer sichtbar ist.

13. Verfahren nach Anspruch 12, wobei die Rückfahrkamera konfiguriert ist, um eine Sicht hinter das Kraftfahrzeug bereitzustellen.

14. Verfahren nach Anspruch 13, ferner umfassend die folgenden Schritte:
Verarbeiten der Videosignale, um dem Fahrer eine normale Sicht bereitzustellen, wenn die Körperbewegung kleiner als der Schwellenabstand und größer als ein zweiter Schwellenabstand ist; und
Verarbeiten der Videosignale, um dem Fahrer eine Weitwinkelansicht bereitzustellen, wenn die Körperbewegung den Schwellenabstand überschreitet.

15. Verfahren nach Anspruch 14, ferner umfassend die folgenden Schritte:
Einstellen eines Seitenspiegels, um dem Fahrer eine seitliche Einparkansicht bereitzustellen, wenn die Körperbewegung den Schwellenabstand überschreitet; und
Einstellen des Seitenspiegels, um dem Fahrer eine normale Fahrsicht bereitzustellen, wenn die Körperbewegung kleiner als der Schwellenabstand und größer als der zweite Schwellenabstand ist.

## Revendications

1. Système anticollision de véhicule comprenant :
une caméra de vision arrière (1516) disposée sur un véhicule et agencée pour surveiller au moins une région sujette aux collisions adjacente audit véhicule ;
un premier capteur (307) positionné à l'intérieur dudit véhicule et agencé pour déterminer la position de la tête d'un conducteur par rapport à un point désigné dans ledit véhicule ;
un affichage (1512) disposé en vue dudit conducteur, ledit affichage couplé à ladite caméra de vision arrière (1516) ; et
un contrôleur (1502) configuré pour contrôler le fonctionnement dudit capteur (307), ladite caméra de vision arrière (1516) et ledit affichage (1512), le contrôleur (1502) étant configuré pour activer ledit affichage (1512) et ladite caméra de vision arrière (1516) pour afficher ladite au moins une région sujette aux collisions adjacente audit véhicule lorsque ledit capteur détecte que ladite tête du conducteur est au-delà d'une distance seuil par rapport audit point désigné,
dans lequel ladite caméra de vision arrière (1516) comprend une caméra à large champ de vision disposée sur une zone arrière dudit véhicule et agencée pour imager une zone proche d'un pare-chocs arrière du véhicule,
**caractérisé en ce que**
le système anticollision de véhicule comprend en outre une caméra à champ de vision normal (1518) disposée sur une zone arrière dudit véhicule et agencée pour imager la zone derrière ledit véhicule, ladite caméra à champ de vision normal étant couplée audit affichage et contrôlée de manière opérationnelle par ledit contrôleur (1502).

2. Système anticollision de véhicule selon la revendication 1, dans lequel ladite caméra à champ de vision large (1516) et ladite caméra à champ de vision normal (1518) sont pourvues dans une seule caméra de vision arrière avec un champ de vision réglable par ledit contrôleur (1502).

3. Système anticollision de véhicule selon la revendication 1, comprenant en outre un rétroviseur latéral réglable électroniquement (105), dans lequel ledit rétroviseur latéral (105) est réglé de manière contrôlable par ledit contrôleur (1502) en réponse à ladite position de tête du conducteur.

4. Système anticollision de véhicule selon la revendication 1, comprenant en outre une caméra avant (1514), disposée au niveau d'une zone avant dudit véhicule et agencée pour imager une région englobant les deux côtés dudit avant de véhicule d'un devant dudit véhicule.

5. Système anticollision de véhicule selon la revendication 4,
dans lequel ledit premier capteur (307) est configuré pour déterminer une distance entre le conducteur et une surface d'un siège ;
le système anticollision de véhicule comprenant en outre
un deuxième capteur (1508) configuré pour détecter une sélection de rapport de transmission ;
un troisième capteur (1506) configuré pour sonder une vélocité de déplacement dudit véhicule ;
la caméra avant (1514) étant positionnée à une position la plus devant sur ledit véhicule et orientée pour imager une zone englobant au moins 180° autour du devant dudit véhicule ;
la caméra de vision arrière (1516) étant positionnée à une position la plus en arrière sur ledit véhicule ;
l'affichage (1512) étant adapté pour afficher une vidéo audit conducteur ; le contrôleur (1502) étant en communication électrique avec ledit premier capteur, ledit deuxième capteur, ledit troisième capteur, ledit système de caméra avant, ledit système de caméra de vision arrière, et ledit affichage,
le contrôleur (1502) étant configuré pour fournir des flux vidéo à partir de ladite caméra avant et ladite caméra de vision arrière en fonction d'une analyse de données fournies au contrôleur par ledit premier capteur, ledit deuxième capteur, ledit troisième capteur.

6. Système selon la revendication 5, dans lequel ladite analyse de données comprend les premier, deuxième et troisième capteurs étant configurés pour :
déterminer si ladite distance entre ledit conducteur et ladite surface dudit siège dépasse un premier seuil ;
détecter si ledit rapport de transmission est un rapport de marche arrière ; et
détecter si ladite vélocité de déplacement dudit véhicule est en dessous d'une vélocité seuil de vitesse.

7. Système selon la revendication 6, dans lequel ledit contrôleur (1502) fournit sélectivement ledit flux vidéo de ladite caméra avant audit affichage lorsque ladite distance entre ledit conducteur et ladite surface dudit siège dépasse ledit premier seuil, ledit rapport de transmission n'est pas dans ledit rapport de marche arrière, et ladite vélocité de déplacement dudit véhicule est en dessous de la vélocité seuil de vitesse.

8. Système selon la revendication 6, dans lequel ledit contrôleur fournit sélectivement ledit flux vidéo de ladite caméra de vision arrière audit affichage lorsque ladite distance entre ledit conducteur et ladite surface dudit siège dépasse ledit premier seuil, ledit rapport de transmission est dans ledit rapport de marche arrière, et ladite vélocité de déplacement dudit véhicule est en dessous de la vélocité seuil de vitesse.

9. Système selon la revendication 6, comprenant en outre un moteur de réglage de rétroviseur latéral contrôlé par ledit contrôleur, dans lequel
ledit contrôleur entraîne ledit moteur de réglage de rétroviseur latéral pour régler un rétroviseur latéral à une position par défaut lorsque ladite vélocité de déplacement dudit véhicule est au-dessus de la vélocité seuil de vitesse, et ledit contrôleur entraîne ledit moteur de réglage de rétroviseur latéral pour régler un rétroviseur latéral à une position de stationnement en marche arrière lorsque ladite distance entre ledit conducteur et ladite surface dudit siège dépasse ledit premier seuil, ledit rapport de transmission est dans ledit rapport de marche arrière, et ladite vélocité de déplacement dudit véhicule est en dessous de la vélocité seuil de vitesse.

10. Procédé anticollision de véhicule pour un véhicule à moteur, comprenant les étapes consistant à
détecter un mouvement de corps par un conducteur ;
évaluer ledit mouvement de corps pour déterminer si ledit mouvement de corps dépasse une distance seuil ; et
activer un processus anticollision lorsque ledit mouvement de corps dépasse ladite distance seuil,
dans lequel ledit mouvement de corps est un mouvement d'inclinaison vers l'avant, et ladite distance seuil est mesurée à partir de l'appui-tête du siège d'un conducteur ;
ledit processus anticollision comprenant en outre les étapes consistant à :
détecter si ledit véhicule à moteur est dans un rapport de non-marche arrière ;
activer une caméra de vision frontale lorsque ledit véhicule à moteur est dans ledit rapport de non-marche arrière ; et,
transmettre un signal vidéo de ladite caméra de vision frontale à un affichage visible par ledit conducteur,
dans lequel ladite caméra de vision frontale a au moins un champ de vision de 180° à l'avant dudit véhicule à moteur.

11. Procédé selon la revendication 10, dans lequel ladite caméra de vision frontale comprend une pluralité de caméras configurées pour fournir ledit champ de vision de 180°.

12. Procédé selon la revendication 10, dans lequel ledit processus anticollision comprenant en outre les étapes consistant à :
détecter si ledit véhicule à moteur est dans un rapport de marche arrière ;
activer une caméra de vision arrière lorsque ledit véhicule à moteur est dans ledit rapport de marche arrière ; et transmettre un signal vidéo de ladite caméra de vision arrière à un affichage visible par ledit conducteur.

13. Procédé selon la revendication 12, dans lequel ladite caméra de vision arrière est configurée pour fournir une vue derrière ledit véhicule à moteur.

14. Procédé selon la revendication 13, comprenant en outre les étapes consistant à :
traiter lesdits signaux vidéo pour fournir une vue normale audit conducteur lorsque ledit mouvement de corps est inférieur à ladite distance seuil et supérieur à une deuxième distance seuil ; et
traiter lesdits signaux vidéo pour fournir une vue à angle large audit conducteur lorsque ledit mouvement de corps dépasse ladite distance seuil.

15. Procédé selon la revendication 14, comprenant en outre les étapes consistant à :
régler un rétroviseur latéral pour fournir une vue de stationnement latérale audit conducteur lorsque ledit mouvement de corps dépasse ladite distance seuil ; et
régler ledit rétroviseur latéral pour fournir une vue de conduite normale audit conducteur lorsque ledit mouvement de corps est inférieur à ladite distance seuil et supérieur à ladite deuxième distance seuil.
